# EUROPEAN PATENT APPLICATION

(11) **EP 1 267 012 A1**
(43) Date of publication of application: **18.12.2002**
(21) Application number: 01000214.5
(22) Date of filing: 14.06.2001
(51) Int. Cl.: E04F 15/04

(54) **A combined set comprising at least a first and a second floor covering laminated panel**

(71) Applicant: Benope N.V., 9300 Aalst (BE)
(72) Inventor: Nel, M. Willy, 9300 Aalst (BE)
(74) Representative: Quintelier, Claude

(57) **Abstract**

A combined set comprising at least a first (10-1) and a second floor covering laminated panel (10-2), said panels being provided with coupling parts comprising a tongue (13) applied on a first lateral edge (11) and a groove (14) applied on a second lateral edge (12), said panels further comprising locking means provided for mutually engaging said first and second panel when coupled, said locking means comprising a first locking member (30,31,32) having a first inclined face (30) with a first slope (α) and starting from a front end of said tongue and extending towards a first cavity (32) in a direction towards an under side of said panel, said locking means having a second locking member (20,22,26) comprising a lower lip having a second inclined face (20) with a second slope (γ) corresponding to said first slope in such a manner that said first and second inclined face contact each other offset of said groove when said first and second panel are mutually engaged.

## Description

The present invention relates to a combined set comprising at least a first and a second floor covering laminated panel, each panel comprising a wood-based core as well as a first and a second lateral edge extending at opposite sides of a same panel and in parallel to each other, said first and second lateral edge being provided with coupling parts integrally formed with said core and comprising a tongue applied on said first lateral edge and a groove applied on said second lateral edge, said tongue and groove being configured to co-operate by coupling said first and second panel, said panels further comprising locking means provided for mutually engaging said first and second panel when coupled, said locking means comprising a first locking member formed by an extension on a lower side of said tongue and a second locking member formed by a lower lip extending distally from a lower side of said groove, said second locking member comprising a tooth situated at an end portion of said lower lip and provided to engage into a first cavity of said first locking member when said first and second panel are coupled, said tongue and groove having each an upper side provided to extend in parallel to each other and to contact each other when coupled.

Such a combined set is known from US-A-6,006,486 describing a first and second panel which can be coupled together by means of their coupling parts. Once coupled the panels are mutually engaged by means of their locking means enabling a reliable locking of the panels. The tongue applied on the first lateral edge clamps into the groove on the second lateral edge of a further panel in order to couple two panels. The locking of the coupled panels is realised by means of the tooth engaging into the first cavity.

A drawback of the known combined set is that the tongue is clamped into the groove causing the upper and lower side of the tongue and the groove to contact each other. This causes on its turn that the tongue will apply a pressure on the upper and lower side of the groove leading to a tearing open of the groove in a direction parallel to the upper surface of the panel. This tearing will then lead to a weakening of the coupling and to upstanding edges of the panels, causing small obstacles on the floor. Furthermore since the tongue and the groove must clamp into each other they need to be accurately manufactured. Indeed, inaccurate dimensions can lead either to the fact that the tongue does not fit into the groove or, if the tongue is not thick enough, to an insufficient clamping. Moreover, hygroscopic effects could also lead either to a swelling or a shrinkage of the panel causing also an inadequate coupling of the tongue and the groove.

The object of the present invention is to realise a combined set comprising at least a first and a second floor covering laminated panel where no such clamping between tongue and groove is required without affecting the reliability of the clamping.

For this purpose a combined set according to the present invention is characterised in that said extension forming said first locking member has a first inclined face with a first slope and starting from a front end of said tongue and extending towards said first cavity in a direction towards an under side of said panel, said lower lip having a second inclined face with a second slope corresponding to said first slope in such a manner that said first and second inclined face contact each other offset of said groove when said first and second panel are mutually engaged. Since the first inclined face starts from a front end of said tongue, the lower side of the tongue is inclined within the groove and no longer contacts the lower side of the groove thus avoiding a clamping of the tongue into the groove. Since the first and second inclined face contact each other offset of said groove, there is a contact surface at the lower side of the coupling parts and the reliability of the coupling is not affected.

A first preferred embodiment of a combined set according to the invention is characterised in that a second cavity is provided at a first transition between said second inclined face and said tooth, and wherein a protrusion is provided at a second transition between said first inclined face and said first cavity, said second cavity and said protrusion being positioned and dimensioned in such a manner as to mutually engage when said first and second panel are mutually engaged. Since the protrusion and the second cavity mutually engage, they enable a locking of the panels. Moreover, as this locking takes place at said tooth, the locking occurs after the tongue has been engaged into the groove and thus the locking as if it says ends the coupling of the panels.

A second preferred embodiment of a combined set according to the invention is characterised in that said tooth has a first contact face extending from said second cavity in an upward direction with respect to said underside and inclined towards an extremity of said second locking member over a first inclination angle, said first cavity having a first cavity side extending from said protrusion in an upward direction with respect to said underside and turned away from said front side of said tongue over a second inclination angle, said first and second inclination angle having a corresponding value. This enables a good clamping of the tooth into the first cavity.

Preferably said second inclined face starts from an end point of said groove situated at said second lateral edge. Manufacturing is made more easy in such a manner.

The invention will now be described in more details with reference to the drawings illustrating i.a. a preferred embodiment of a combined set according to the present invention. In the drawings :
figure 1 illustrates the problem occurring when a tongue and a groove are clamped together;
figure 2 illustrates a floor panel according to the present invention;
figure 3 illustrates a first and a second lateral edge of a first and a second panel; and
figures 4 to 7 illustrate how two panels are coupled and locked with each other.

In the drawings a same reference has been assigned to a same or analogue element.

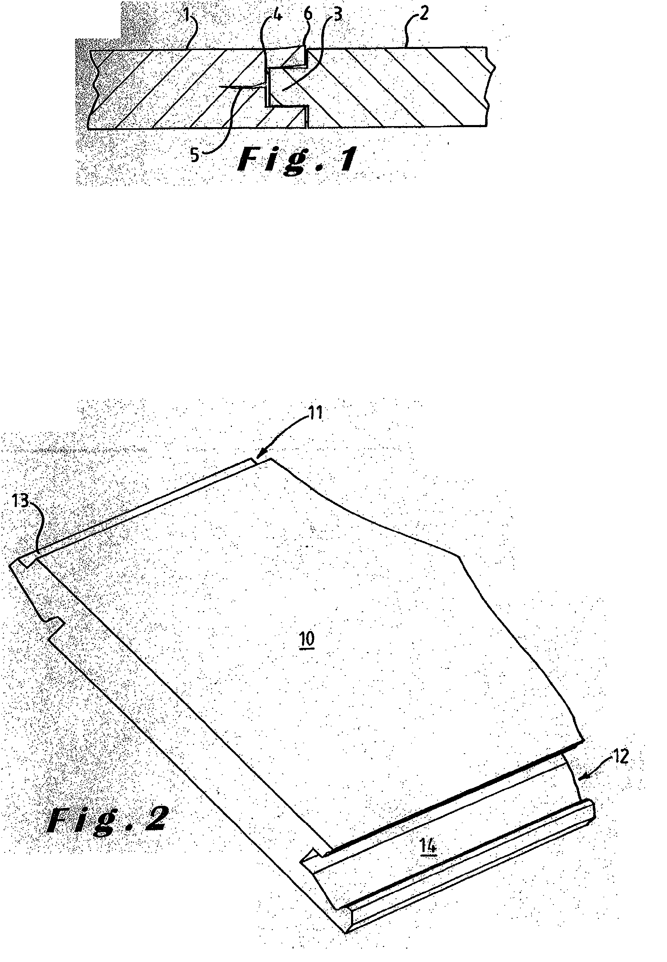

Figure 1 illustrates a conventional coupling according to the state of the art between a first 1 and a second panel 2. The panels are floor covering laminated panels comprising a wood-based core. The latter is for example made of MDB or HDB (Medium or High Density Board). A tongue 3 is applied on a first lateral edge of the second panel 2. The tongue couples with a groove 4 applied on a second lateral edge of the first panel 1 in order to couple the first and second panel with each other. When the tongue is clamped into the groove it exerts a pressure on the upper and lower side of the groove causing a tearing 5 of the core material of which the panel is made. This tearing will cause an upper edge 6 of the first panel 1 to lift up somewhat, leading to an unequal floor surface and the formation of obstacles on the floor.

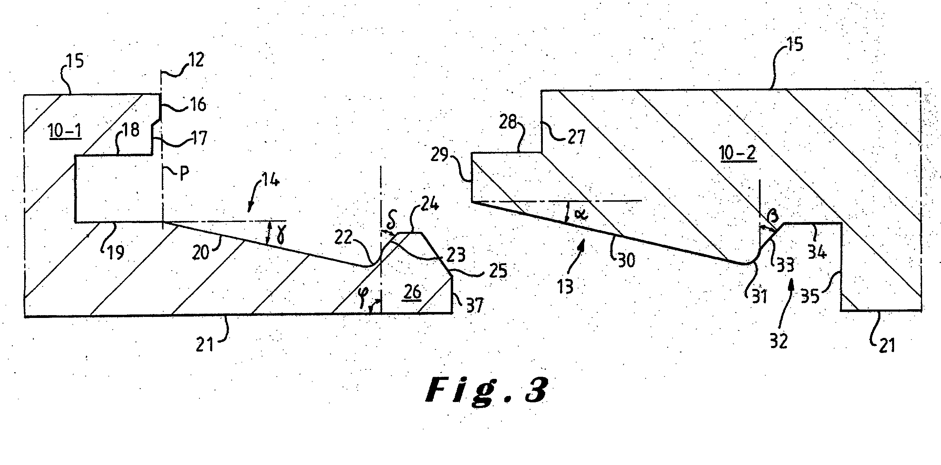

An example of a floor covering laminated panel 10 according to the present invention is illustrated in figure 2. The panel also comprises a wood based core as well as a first 11 and a second 12 lateral edge extending at opposite sides of the panel. The first and second lateral edge extend in parallel with respect to each other and are provided with coupling parts integrally formed with said core. The coupling parts comprise a tongue 13 applied on the first lateral edge 11 and a groove 14 applied on the second lateral edge 12. The tongue and the groove are configured in such a manner as to co-operate by coupling a first panel with a second panel.

Figure 3 illustrates in more detail the first lateral edge 11 of a second panel 10-2 and the second lateral edge of a first panel 10-1 which have to be coupled with each other by means of their coupling parts 13 and 14.

The tongue 13 is situated offset the upper side 15 of the panel. A lateral flange 27 extending substantially perpendicular with the upper side 15 connects an upper side 28 of the tongue 13 with the upper side 15 of the panel. A front end 29 of the tongue 13 forms the transition between the upper side 28 and a first inclined face 30 having a first slope with an angle α, preferably of 30°, in a direction towards an under side 21 of the panel. A first cavity 32 extends between an extremity of the first inclined face 30 and the under side 21 of the panel. The first cavity has an upstanding cavity side 35 extending substantially perpendicular with respect to said under side 21 and connecting the latter with a further cavity side 34 extending substantially perpendicular with respect to the cavity side 35. A first cavity side 33 extending over a second inclination angle β, preferably of 45°, starts from said side 34 toward the inclined face 30. The first cavity side is turned away from the front side 29 of the tongue in order to engage with a tooth 26 as will be described hereinafter. A protrusion 31 is provided at a transition between the first inclined face 30 and the first cavity side 33. The protrusion 31 preferably has a radius of less than 1 mm.

The groove 14 situated at the second lateral edge of the panel 10-1 is situated around in the centre of core material. A staircase shaped profile showings stairs 16 and 17 connects the groove to the upper side 15 of the panel. The groove comprises an upper side 18 and a lower side 19. The lower and upper side preferably extend in parallel with respect to the upper side 15 and lower side 21 of the panel. The lower side 19 of the groove extends as from the groove bottom up to a line p on which said stair 16 is located. A lower lip extends distally and downwards from the lower side 19 and starts from said line p. The lower lip is integrally formed with the core material of the panel and has a second inclined face 20 having a second slope with an angle α, preferably of 30°, and corresponding with the angle α of the first inclined face 30.

A tooth 26 is applied downstream of the lower lip. A second cavity 22 is provided at a first transition between the second inclined face 20 and the tooth 26. The second cavity is applied and dimensioned, preferably with a radius of less than 1 mm, in such a manner as to mutually engage with the protrusion 31 located at the end of the first inclined face 30 when the first and second panel are mutually engaged. The tooth has a first contact face 23 extending from said second cavity 22 in an upward direction with respect to said underside 21 of the panel and inclined over a first inclination angle δ corresponding to the second inclination angle β. The angle θ extending between the underside 21 and the transition point P between the second cavity 22 and the first contact face 23 is preferably 90°. The tooth further comprises faces 24, 25 and 37 whereby face 24 extends in parallel and face 37 perpendicularly with respect to said under side 21. Face 25 being inclined over an angle θ, preferably of 45°.

The first inclined face 30, the protrusion 31 and the first cavity 32 form a first locking member, whereas the second inclined face 20, the second cavity 22 and the tooth 26 form a second locking member. The first and second locking member together form locking means provided for mutually engaging the first 10 - 1 and second 10 - 2 panel when coupled.

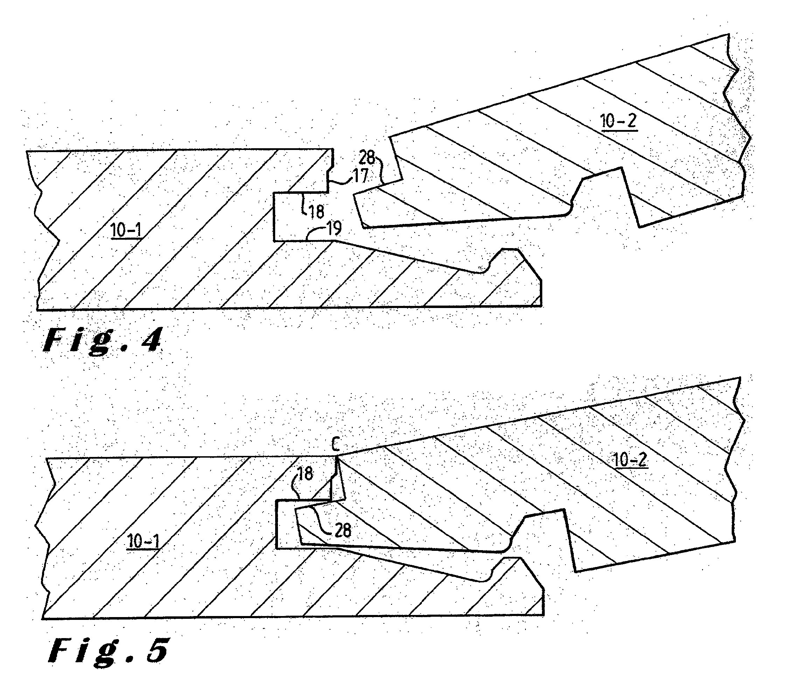

The coupling and engaging of the first 10 - 1 and second 10 - 2 panel will now be described with reference to the figures 4 to 7. Upon coupling the second panel 10 - 2 with the first panel 10 - 1, the second panel is inclined with respect to the first and the tongue 13 of the second panel is faced towards the groove 14 of the first panel (figure 4). The tongue (figure 5) is then inserted into the groove by having the upper side 28 of the tongue sliding along the corner between stair 17 and the upper side 18 of the groove. The second panel 10 - 2 remains inclined in such a manner that the first inclined face 30 remains tilted over the tooth 26. The thickness of the tongue is smaller than the width of the groove in such a manner that the tongue can freely move inside the groove.

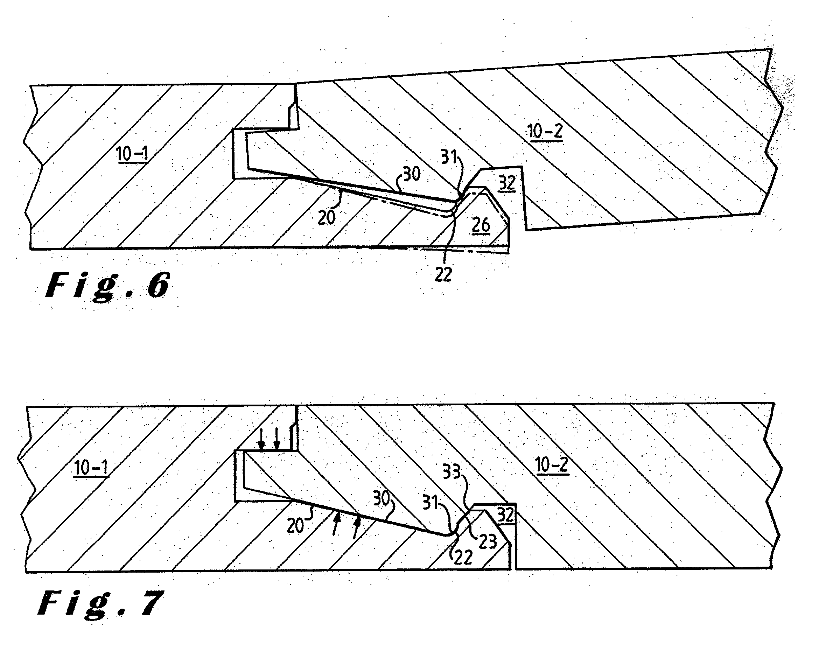

The tongue is shifted inside the groove until the corner point C, located at the transition between the upper side 15 and the lateral flange 27 of the second panel, hits the corresponding corner point of the first panel. Once both corner points have hit each other, the second panel is bent downwards (figure 6) in such a manner that the tongue starts to rotate inside the groove until the upper side 28 of the tongue contacts the upper side 18 of the groove. This rotation is possible since the tongue is less thick than the groove. During this bending the protrusion 31 slides over the first contact face 23 of the tooth 26 pushing the latter downwards. Since the core material is somewhat resilient, the lower lip and the tooth 26 are also bent downwards.

The sliding of the protrusion 31 over the first contact face 23 continues until the protrusion 31 reaches the second cavity 22 and gets lodged therein. The resilient core material of the panel then causes the lower lip and the tooth to return to their rest position causing the protrusion 31 to get locked into the second cavity 22.

The bending and resilient movement have also caused the first 30 and second 20 inclined face to move towards each other in such a manner that they contact each other when the first and second panel are mutually engaged. Since however the first and second inclined face are offset with respect to the tongue and the groove, the pressure applied inside the groove is only at the upper side of the groove, thus avoiding a tearing of the groove. The panels according to the present invention thus enable to have the pressure applied at different places offset from each other. Since the contact takes place as well at the level of the tongue and the groove and at the level of the inclined faces, the coupling of the panels is not affected by offsetting the contact surfaces. Moreover, the protrusion 31 locked in the second cavity 22 provides a reliable and strong locking of the panel.

As can be seen in figure 7 some open space 39 remains between the tooth 26 and the first cavity 32 in order to enable some tolerances.

## Claims

1. A combined set comprising at least a first and a second floor covering laminated panel, each panel comprising a wood-based core as well as a first and a second lateral edge extending at opposite sides of a same panel and in parallel to each other, said first and second lateral edge being provided with coupling parts integrally formed with said core and comprising a tongue applied on said first lateral edge and a groove applied on said second lateral edge, said tongue and groove being configured to co-operate by coupling said first and second panel, said panels further comprising locking means provided for mutually engaging said first and second panel when coupled, said locking means comprising a first locking member formed by an extension on a lower side of said tongue and a second locking member formed by a lower lip extending distally from a lower side of said groove, said second locking member comprising a tooth situated at an end portion of said lower lip and provided to engage into a first cavity of said first locking member when said first and second panel are coupled, said tongue and groove having each an upper side provided to extend in parallel to each other and to contact each other when coupled, **characterised in that** said extension forming said first locking member has a first inclined face with a first slope and starting from a front end of said tongue and extending towards said first cavity in a direction towards an under side of said panel, said lower lip having a second inclined face with a second slope corresponding to said first slope in such a manner that said first and second inclined face contact each other offset of said groove when said first and second panel are mutually engaged.

2. A combined set as claimed in claim 1, **characterised in that** a second cavity is provided at a first transition between said second inclined face and said tooth, and wherein a protrusion is provided at a second transition between said first inclined face and said first cavity, said second cavity and said protrusion being positioned and dimensioned in such a manner as to mutually engage when said first and second panel are mutually engaged.

3. A combined set as claimed in claim 2, **characterised in that** said second cavity has a radius of less than 1 mm and said protrusion has a radius of less than 1 mm.

4. A combined set as claimed in any one of the claims 2 or 3, **characterised in that** said tooth has a first contact face extending from said second cavity in an upward direction with respect to said underside and inclined towards an extremity of said second locking member over a first inclination angle, said first cavity having a first cavity side extending from said protrusion in an upward direction with respect to said underside and turned away from said front side of said tongue over a second inclination angle, said first and second inclination angle having a corresponding value.

5. A combined set as claimed in claim 3, **characterised in that** said first and second inclination angle have a value of approximately 45°.

6. A combined set as claimed in any one of the claims 1 to 5, **characterised in that** said second inclined face starts from an end point of said groove situated at said second lateral edge.

7. A combined set as claimed in any one of the claims 1 to 6, **characterised in that** an open space is applied between said tooth and first cavity when said first and second panel are engaged.

8. A panel as a component belonging to a combined set as claimed in any one of the claims 1 to 7.
